# EUROPÄISCHE PATENTANMELDUNG

(11) **EP 4 563 393 A1**
(43) Veröffentlichungstag der Anmeldung: **04.06.2025**
(21) Anmeldenummer: 24208162.8
(22) Anmeldetag: 22.10.2024
(51) Int. Cl.: B60L 5/19, B60L 5/24, B60L 5/26, B60L 5/36

(54) **STROMABNEHMER UND FAHRZEUG**

(30) Priorität: 10.11.2023 DE 102023131248
(71) Anmelder: Liebherr-Mining Equipment Colmar SAS, 68025 Colmar cedex (FR)
(72) Erfinder: FORESTIER, Cédric, 68390 Sausheim (FR); WOLF, Mathieu, 68680 Kembs (FR)
(74) Vertreter: Laufhütte, Dieter

(57) **Zusammenfassung**

Die vorliegende Erfindung betrifft einen Stromabnehmer mit zwei Stromabnehmerarmen, wobei der Stromabnehmer einen Abstandshalter, der dazu ausgebildet und angeordnet ist, einen mechanischen und/oder einen elektrischen Kontakt zwischen den zwei Stromabnehmerarmen zu verhindern, aufweist.

## Beschreibung

Die vorliegende Erfindung betrifft einen Stromabnehmer mit zwei Stromabnehmerarmen.

Aus der DE 10 2019 126 557 A1 ist ein Oberleitungssystem bekannt, das zur elektrischen Versorgung eines elektrischen Fahrantriebes einer Baumaschine durch einen Stromabnehmer mit zwei Stromabnehmerarmen der Baumaschine ausgebildet ist.

Die zwei Stromabnehmerarme der Baumaschine können entweder unbeweglich in einer Lagerstellung angeordnet sein oder in einer Arbeitsstellung angeordnet sein, in der sie jeweils einen Strang der Oberleitung elektrisch kontaktieren und in einem Fahrbetrieb der Baumaschine beweglich der Oberleitung folgen können. Sofern die Stromabnehmerarme nicht in der Lager- oder Arbeitsstellung angeordnet sind, können diese durch Stellantriebe horizontal und vertikal bewegt werden.

Es kann sich bspw. aufgrund der steuerungstechnischen und/oder mechanischen Reaktionszeit der Stellantriebe im Falle einer Entgleisung, also eines Lösens von der Oberleitung, eines oder beider Stromabnehmerarme oder bei einer Störung eines Stellantriebs ereignen, dass sich die beiden Stromabnehmerarme berühren womit ein mechanischer und/oder elektrischer Kontakt zwischen den Stromabnehmerarmen entstehen kann.

Bei einer Berührung der Stromabnehmerköpfe der Stromabnehmerarme, die keine elektrische Isolierung aufweisen, können sich Schäden, bspw. ein Kurzschluss in dem an die Stromabnehmerarme angeschlossenen elektrische System der Baumaschine, ereignen. Bspw. kann dieser Kurzschluss direkt zwischen dem Pluspol, der mit einem Stromabnehmerkopf verbunden ist und dem Minuspol, der mit dem anderen Stromabnehmerarm bzw. Stromabnehmerkopf verbunden ist, eines Gleichstromzwischenkreises erfolgen.

Um Schäden in dem elektrischen System der Baumaschine durch Kurzschluss oder Überstrom zu verhindern, kann eine Hochgeschwindigkeits-Sicherung in das elektrische System integriert sein. Allerdings wird nach Auslösen der Hochgeschwindigkeits-Sicherung, insbesondere unter hoher elektrischer Last, eine visuelle Inspektion und ein Funktionstest erforderlich, was einen Kosten- und Zeitaufwand nach sich zieht.

Aus dem Stand der Technik sind weitere elektrische Schutzmechanismen für die Verhinderung von Schäden bei einer unbeabsichtigten Berührung von zwei Stromabnehmerarmen bzw. den Stromabnehmerköpfen der Stromabnehmerarme von mittels einer Oberleitung elektrisch versorgten Fahrzeuge bekannt. In Oberleitungsbussen werden dafür z.B. Dioden- und/oder Rekuperationsschaltungen eingesetzt, die einen Kurzschluss bzw. Schäden in dem an die Stromabnehmerarme angeschlossenen elektrischen System des Fahrzeugs verhindern sollen.

Diese elektrischen Schutzmechanismen sind allerdings, insbesondere für den Einsatz im Bergbau- oder Minenbetrieb, mit hohen Kosten und hohen Zusatzgewichten für das Fahrzeug verbunden ist. Ebenso verringert sich durch solche elektrischen Schutzmechanismen der Gesamtwirkungsgrad der mittels Oberleitung elektrisch versorgten Fahrzeuge.

Vor diesem Hintergrund liegt der vorliegenden Erfindung die Aufgabe zugrunde, einen oben genannten Stromabnehmer, insbesondere im Hinblick auf die Verhinderung von Schäden durch Berührung der Stromabnehmerarme, zu verbessern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass der Stromabnehmer einen Abstandshalter, der dazu ausgebildet und angeordnet ist, einen mechanischen und/oder einen elektrischen Kontakt zwischen den zwei Stromabnehmerarmen zu verhindern, aufweist.

Unter einem elektrischen Kontakt ist vorzugsweise eine Anordnung der Stromabnehmerarme zu verstehen, bei der eine elektrische Verbindung zwischen den Stromabnehmerarmen hergestellt wird, also ein elektrischer Stromfluss zwischen den Stromabnehmerarmen ermöglicht wird. Vorzugsweise ist der Abstandshalter dazu ausgebildet und angeordnet ist, einen einen direken elektrischen Kontakt zwischen den zwei Stromabnehmerarmen zu verhindern Bei einem direkten elektrischen Kontakt erfolgt die elektrische Verbindung vorzugsweise durch eine direkte Berührung der Stromabnehmerarme.

Unter einem mechanischen Kontakt ist vorzugsweise eine Anordnung der Stromabnehmerarme zu verstehen, bei der eine direkte Berührung der Stromabnehmerarme erfolgt.

Vorzugsweise ist vorgesehen, dass jede Stromabnehmerstange einen Stromabnehmerkopf und/oder einen elektrisch nicht isolierten Bereich aufweist und der Abstandshalter dazu ausgebildet und angeordnet ist, einen mechanischen und/oder direkten elektrischen Kontakt zwischen den zwei Stromabnehmerköpfen und/oder den elektrisch nicht isolierten Bereichen zu verhindern.

Unter dem Begriff Verhindern wird vorzugsweise auch ein Vermeiden oder ein Verringern der Wahrscheinlichkeit eines Kontakts verstanden.

Mittels der vorliegenden Erfindung ist es vorzugsweise möglich, die Anzahl der auftretenden mechanischen und/oder elektrischen Kontakte zwischen den Stromabnehmerarmen zu verringern.

Es ist bspw. denkbar, dass ein indirekter elektrischer Kontakt zwischen den zwei Stromabnehmerarmen hergestellt wird, etwa, wenn beide Stromabnehmerarme dieselbe Leitung einer Oberleitung berühren.

Vorzugsweise wird durch den Abstandshalter ein mechanischer Schutz gegen eine direkte Berührung von zwei Stromabnehmerarmen und/oder zwei Stromabnehmerköpfen bereitgestellt.

Der Abstandshalter ist vorzugsweise eine mechanische Vorrichtung, die es ermöglicht, einen mechanischen und/oder, insbesondere direkten, elektrischen Kontakt zwischen den zwei Stromabnehmerarmen und/oder Stromabnehmerköpfen zu vermeiden oder zu verhindern.

Der Abstandshalter ist vorzugsweise derart ausgebildet, dass ein mechanischer und/oder ein, insbesondere direkter, elektrischen Kontakt zwischen den zwei Stromabnehmerarmen und/oder Stromabnehmerköpfen in allen Betriebsstellungen der Stromabnehmerarme vermieden oder verhindert wird.

Die Stromabnehmerarme weisen vorzugsweise eine große vertikale und horizontale Bewegungsfreiheit auf.

Vorzugsweise ist vorgesehen, dass der Stromabnehmer zwei Drehwerke aufweist, wobei jeder der zwei Stromabnehmerarme an jeweils einem der zwei Drehwerke angeordnet ist, und jedes Drehwerk dazu ausgebildet und angeordnet ist, um den jeweiligen Stromabnehmerarm in einem bestimmten Drehwinkelbereich in eine Drehrichtung um eine Drehachse drehen zu können, wobei der Abstandshalter derart ausgebildet und an jedem Drehwerk angeordnet ist, dass beim Drehen eines Stromabnehmerarms in dem bestimmten Drehwinkelbereich der andere Stromabnehmerarm mittels des Abstandshalters in die gleiche Drehrichtung gedreht wird, und/oder wobei der Abstandshalter derart ausgebildet und angeordnet ist, dass die Stromabnehmerarme jeweils beim Drehen eines der zwei Stromabnehmerarme in einem anderen als dem bestimmten Drehwinkelbereich unabhängig voneinander gedreht werden können.

Vorzugsweise wird mittels es Abstandshalters eine Verbindung zwischen den Drehwerken des Stromabnehmers hergestellt.

Vorzugsweise ist vorgesehen, dass der Abstandshalter gegenüber einem oder jedem Stromabnehmerarm und/oder gegenüber einem oder jedem Drehwerk in einem Verschiebebereich relativ verschiebbar ist.

Vorzugsweise ist der Abstandshalter, insbesondere mittels einer Gleitverbindung, auf einer Seite der Drehachse angeordnet und/oder montiert, auf der die Stromabnehmerarme nicht angeordnet sind. Der Abstandshalter kann auch auf einer Seite der Drehachse, angeordnet und/oder montiert sein, auf der die Stromabnehmerarme angeordnet sind.

Stromabnehmer nach einem der vorhergehenden Ansprüche, dadurch gekennzeichnet, dass der Abstandshalter lösbar, insbesondere durch eine oder mehrere Schraubverbindungen, an dem Stromabnehmer angeordnet ist.

Vorzugsweise ist vorgesehen, dass der Abstandshalter einen Isolator, eine Vorrichtung zum Einstellen der Länge des Abstandshalters und/oder ein, zwei oder mehrere Langlöcher aufweist.

Vorzugsweise ist vorgesehen, dass die Vorrichtung zum Einstellen der Länge des Abstandshalters eine Spannschlosshülse mit einer oder mehrerer Kontermuttern aufweist.

Vorzugsweise ist vorgesehen, dass der Isolator derart angeordnet ist, um eine elektrische Verbindung von einem Ende zu einem anderen Ende des Abstandshalters zu verhindern.

Vorzugsweise kann die Länge des Abstandshalters angepasst werden, insbesondere um Fertigungsabweichungen auszugleichen.

Der Abstandshalter kann einen Isolator aufweisen, insbesondere um eine doppelte Isolierung des Stromabnehmers zu erzielen. Der Isolator ist vorzugsweise ein Langstabisolator.

Die Länge des Langlochs oder der Langlöcher, ist vorzugsweise derart ausgestaltet, um alle erforderlichen kinematischen Positionen der Stromabnehmerarme zu ermöglichen und den mechanischen und/oder elektrischen Kontakt zwischen den beiden Stromabnehmern und/oder Stromabnehmerköpfen zu vermeiden oder zu verhindern.

Der Abstandshalter ist vorzugsweise mittels einer oder mehrerer Verschraubungen durch das oder die Langlöcher an dem Stromabnehmer angeordnet oder montiert.

Vorzugsweise ist vorgesehen, dass jeder Stromabnehmerarm in Form einer Stromabnehmerstange ausgebildet ist und/oder einen Stromabnehmerkopf aufweist.

Die Erfindung betrifft auch ein Fahrzeug, insbesondere Baumaschine, insbesondere für den Bergbau- oder Minenbetrieb, insbesondere Muldenkipper mit einer aufstellbaren Mulde, mit einem erfindungsgemäßen Stromabnehmer. Das Fahrzeug kann auch ein Oberteilungsbus sein.

Das Fahrzeug weist vorzugsweise einen elektrischen Fahrantrieb auf, wobei über den Stromabnehmer eine elektrische Verbindung des Fahrantriebs mit einem externen Oberleitungssystem zur Energieversorgung des Fahrantriebs herstellbar ist. Der elektrische Fahrantrieb umfasst vorzugsweise eine Trolley-Interface-Box. Die Trolley-Interface-Box umfasst vorzugsweise eine Hochgeschwindigkeits-Sicherung.

Die Erfindung betrifft auch ein Verfahren zur Verhinderung eines mechanischen und/oder elektrischen Kontakts zwischen zwei Stromabnehmerarmen, vorzugsweise eines erfindungsgemäßen Stromabnehmers, wobei ein mechanischer und/oder elektrischer Kontakt zwischen den Stromabnehmerarmen mittels eines Abstandshalters verhindert wird.

Vorzugsweise ist vorgesehen, dass einer der zwei Stromabnehmerarme in einem bestimmten Drehwinkelbereich in eine Drehrichtung um eine Drehachse gedreht wird, wobei der andere Stromabnehmerarm mittels des Abstandshalters in die gleiche Drehrichtung gedreht wird, und/oder wobei die Stromabnehmerarme jeweils beim Drehen eines der zwei Stromabnehmerarme jeweils in einem anderen als dem bestimmten Drehwinkelbereich unabhängig voneinander gedreht werden.

Vorzugsweise kann die Anzahl der Inspektionen des Stromabnehmers bzw. der mit dem Stromabnehmer ausgestatteten Baumaschine reduziert werden. Vorzugsweise wird das Risiko eines Kurzschlusses dadurch verringert, dass ein direkter Kontakt zwischen den beiden Stromabnehmerarmen und/oder Stromabnehmerköpfen verhindert wird.

Das Fahrzeug, insbesondere die Baumaschine, kann ferner eine Hochgeschwindigkeits-Sicherung, die ausgebildet ist, um bei einem elektrischen Kontakt der Stromabnehmerarme auszulösen und die elektrische Verbindung der Stromabnehmerarme zu trennen, aufweisen.

Die Hochgeschwindigkeits-Sicherung kann jedoch bei einem Auslösen, insbesondere bei hoher Last in ihrer Funktion beeinträchtigt werden. Wenn die Hochgeschwindigkeits-Sicherung bei hoher Last auslöst, kann eine visuelle und/oder funktionelle Inspektion der Hochgeschwindigkeits-Sicherung erforderlich werden, die zeitaufwendig ist.

Die Vorteile der Erfindung liegen vorzugsweise darin, dass die erfindungsgemäße Lösung kostengünstig ist und/oder der Abstandshalter ein geringes Gewicht aufweist und/der die Effizienz des Fahrzeugs nicht beeinträchtigt wird. Ebenso wird vorzugsweise die jeweilige vertikale Bewegungsfreiheit der Stromabnehmerarme durch den Abstandshalter nicht eingeschränkt.

Vorzugsweise steht der Abstandshalter unter mechanischer Spannung, wenn sich die Stromabnehmerarme nähern.

Vorzugsweise kann der Abstandshalter bei einer Kalibrierung der Stromabnehmerarme entfernt werden.

Vorzugsweise bleiben alle notwendigen Freiheitsgrade der Stromabnehmerarme erhalten.

Vorzugsweise wird ein Spreizen der Stromabnehmerarme bei einer dynamischen Verbindung des Stromabnehmers mit einer Oberleitung ermöglicht.

Vorzugsweise wird eine gewisse Annäherung der Stromabnehmerarme, bspw. wenn das Fahrzeug eine Kurve durchfährt, ermöglicht.

Vorzugsweise wird ein Blockieren des Stromabnehmers durch den Abstandshalter und/oder eine Kollision des Abstandshalters mit einer Einrichtung der Oberleitung, bspw. mit einer dynamischen Einführung, vermieden.

Vorzugsweise ist der Abstandshalter derart ausgebildet und angeordnet, dass ein Verlust einer Verbindung eines der Stromabnehmerarme zu einer Oberleitung vermieden wird.

Vorzugsweise ist der Abstandshalter derart ausgebildet und angeordnet, dass der Abstandshalter gegenüber Schmutz, Eis, UV-Strahlung und/oder Wasser, insbesondere in einer Bergbauumgebung widerstandsfähig ist.

Vorzugsweise ist der Abstandshalter elektrisch isoliert.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine perspektivische Ansicht einer Ausführungsform eines Abstandshalters eines erfindungsgemäßen Stromabnehmers.
- Fig. 2:: eine perspektivische Ansicht einer Ausführungsform eines erfindungsgemäßen Stromabnehmers.
- Fig. 3:: eine Draufsicht und eine Seitenansicht einer Ausführungsform eines erfindungsgemäßen Stromabnehmers.
- Fig. 4:: eine Draufsicht einer Ausführungsform eines erfindungsgemäßen Stromabnehmers in einer Betriebsstellung.
- Fig. 5:: eine Draufsicht einer Ausführungsform eines erfindungsgemäßen Stromabnehmers in einer Betriebsstellung.

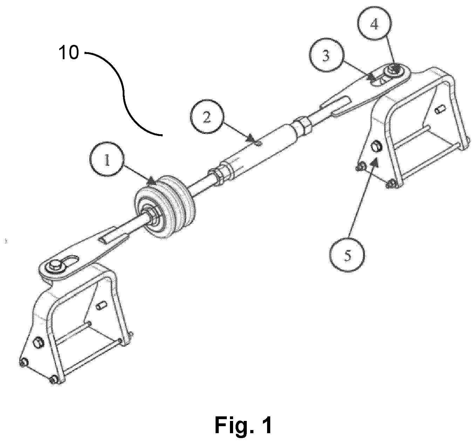

In Fig. 1 ist ein Abstandshalter 10 eines Stromabnehmers dargestellt.

Der Abstandshalter 10 weist einen elektrischen Isolator 1 in Form eines Langstabisolators, eine Spannschlosshülse 2 mit einem Links- und einem Rechtsgewinde und Kontermuttern zum Einstellen der Länge des Abstandshalters 10 und zwei Langlöcher 3 auf.

Die Länge der Langlöcher 3 ist derart, dass ein Kontakt zwischen zwei Stromabnehmerarmen vermieden wird und genügend Bewegungsfreiheit für die die normale Funktion der Stromabnehmerarme besteht.

Ebenso in Fig. 1 sind zwei Halterungen 5 für den Abstandshalter 10 dargestellt. Diese Halterungen 5 sind vorzugsweise jeweils an einem Drehwerk angeordnet und/oder sind jeweils Bestandteil des jeweiligen Drehwerks.

Der Abstandshalter 10 ist jeweils mittels einer Verschraubung 4, die eine Schraube und eine Unterlegscheibe umfasst, an den Halterungen lösbar und soweit dies durch die Langlöcher möglich ist, verschiebbar angeordnet und/oder montiert.

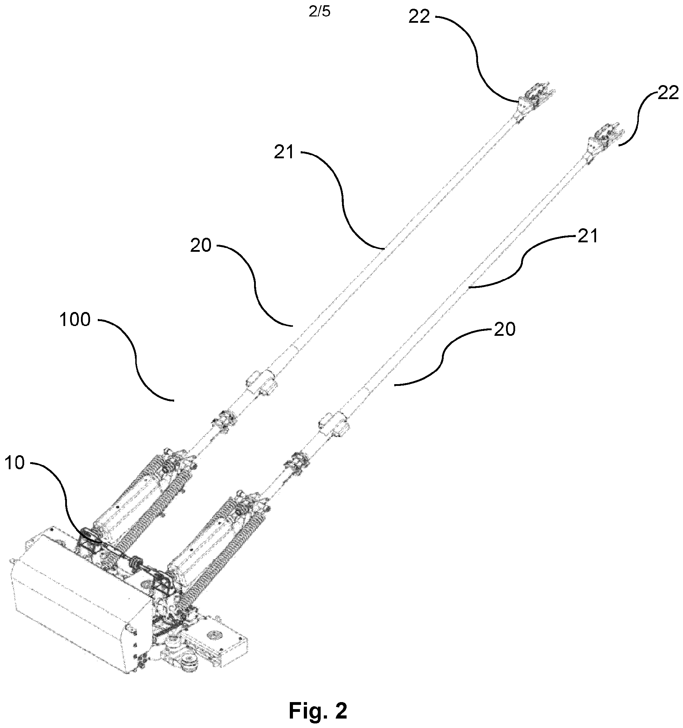

Der in Fig. 2 dargestellte Stromabnehmer 100 weist einen Abstandshalter 10 und zwei Stromabnehmerarme 20 mit jeweils einer Stromabnehmerstange 21 und einem Stromabnehmerkopf 22 auf.

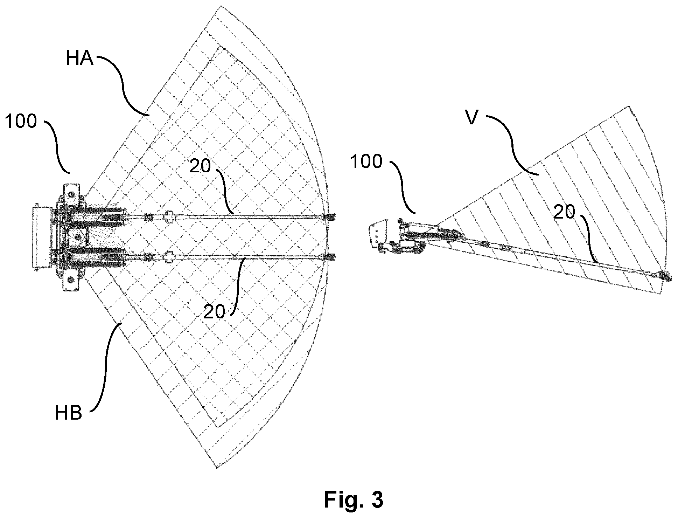

In Fig. 3 sind die Hüllkurven der möglichen Positionen der Stromabnehmerarme 20 des Stromabnehmers 100 dargestellt.

Dabei überschneiden sich die möglichen horizontalen Positionen in der horizontalen Hüllkurve HA des in der linken Ansicht von Fig. 3 oberen Stromabnehmerarms 20 mit den möglichen horizontalen Positionen in der horizontalen Hüllkurve HB des in der linken Ansicht von Fig. 3 unteren Stromabnehmerarms 20 teilweise, wobei in dem Überschneidungsbereich ein mechanischer und/oder elektrischer Kontakt der Stromabnehmerarme 20 erfolgen kann.

In der rechten Ansicht von Fig. 3 ist die Seitenansicht einer vertikalen Hüllkurve V der möglichen vertikalen Positionen eines Stromabnehmerarms 20 des Stromabnehmers 100 dargestellt, wobei die andere vertikale Hüllkurve der möglichen vertikalen Positionen des Stromabnehmerarms 20 des Stromabnehmers 100 in der Seitenansicht deckungsgleich mit der vertikalen Hüllkurve V ist. Nur in einer vertikalen Ebene erfolgt vorzugsweise kein mechanischer und/oder elektrischer Kontakt der Stromabnehmerarme 20, da die Stromabnehmerarme 20 in ihrer Hüllkurve V der rein vertikalen Positionen keine Schnittebene aufweisen.

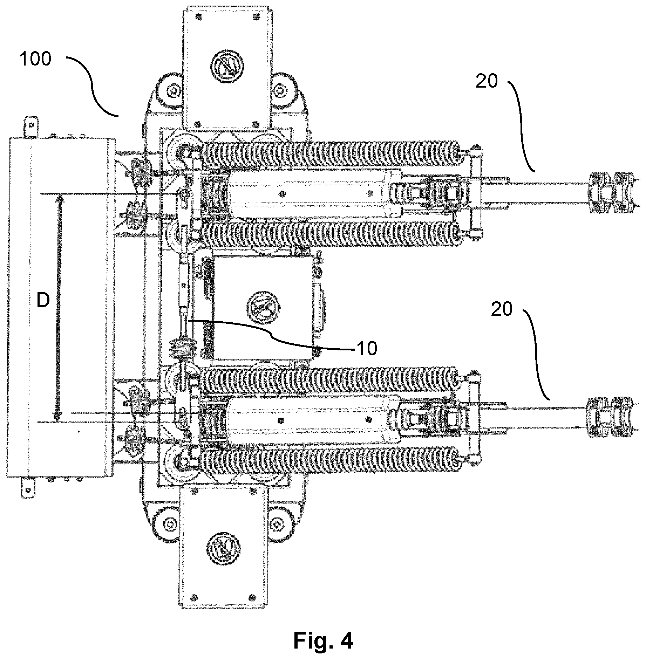

In Fig. 4 sind die zwei Stromabnehmerarme 20 eines Stromabnehmers 100 mit einem Abstandshalter 10 in einer Betriebsstellung gezeigt, in der beide Stromabnehmerarme 20 den geringstmöglichen Abstand aufweisen. Der Abstand D zwischen den Schrauben der Verschraubung mittels der der Abstandshalter 10 an den nicht bezeichneten Drehwerken angeordnet ist, ist dabei der größtmögliche Abstand, so dass der Abstandshalter 10 auf Zug beansprucht wird und bspw. bei einer Drehung des in Fig. 4 oberen Stromabnehmerarms 20 in dem Uhrzeigersinn durch den Abstandshalter 10 auch eine Drehung des in Fig. 4 unteren Stromabnehmerarms 20 in dem Uhrzeigersinn erfolgt, womit der Abstand der Stromabnehmerarme 20 konstant oder annähernd konstant gehalten wird.

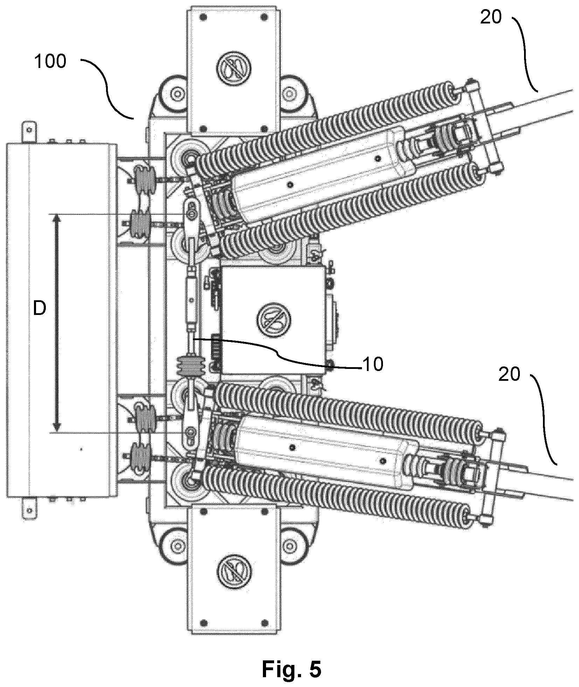

In Fig. 5 sind die zwei Stromabnehmerarme 20 eines Stromabnehmers 100 mit einem Abstandshalter 10 in einer Betriebsstellung gezeigt, in der beide Stromabnehmerarme 20 den größtmöglichen Abstand aufweisen. Der Abstand D zwischen den Schrauben der Verschraubung mittels der der Abstandshalter 10 an den nicht bezeichneten Drehwerken angeordnet ist, ist dabei der geringstmögliche Abstand, womit eine maximale Spreizung der Stromabnehmerarme 20 ermöglicht wird.

## Patentansprüche

1. Stromabnehmer mit zwei Stromabnehmerarmen, **dadurch gekennzeichnet, dass** der Stromabnehmer einen Abstandshalter, der dazu ausgebildet und angeordnet ist, einen mechanischen und/oder einen elektrischen Kontakt zwischen den zwei Stromabnehmerarmen zu verhindern, aufweist.

2. Stromabnehmer nach Anspruch 1, **dadurch gekennzeichnet, dass** der Stromabnehmer zwei Drehwerke aufweist, wobei jeder der zwei Stromabnehmerarme an jeweils einem der zwei Drehwerke angeordnet ist, und jedes Drehwerk dazu ausgebildet und angeordnet ist, um den jeweiligen Stromabnehmerarm in einem bestimmten Drehwinkelbereich in eine Drehrichtung um eine Drehachse drehen zu können, wobei der Abstandshalter derart ausgebildet und an jedem Drehwerk angeordnet ist, dass beim Drehen eines Stromabnehmerarms in dem bestimmten Drehwinkelbereich der andere Stromabnehmerarm mittels des Abstandshalters in die gleiche Drehrichtung gedreht wird, und/oder wobei der Abstandshalter derart ausgebildet und angeordnet ist, dass die Stromabnehmerarme jeweils beim Drehen eines der zwei Stromabnehmerarme in einem anderen als dem bestimmten Drehwinkelbereich unabhängig voneinander gedreht werden können.

3. Stromabnehmer nach Anspruch 1 oder 2, **dadurch gekennzeichnet, dass** der Abstandshalter gegenüber einem oder jedem Stromabnehmerarm und/oder gegenüber einem oder jedem Drehwerk in einem Verschiebebereich relativ verschiebbar ist.

4. Stromabnehmer nach einem der vorhergehenden Ansprüche, **dadurch gekennzeichnet, dass** der Abstandshalter lösbar, insbesondere durch eine oder mehrere Schraubverbindungen, an dem Stromabnehmer angeordnet ist.

5. Stromabnehmer nach einem der vorhergehenden Ansprüche, **dadurch gekennzeichnet, dass** der Abstandshalter einen Isolator, eine Vorrichtung zum Einstellen der Länge des Abstandshalters und/oder ein, zwei oder mehrere Langlöcher aufweist.

6. Stromabnehmer nach Anspruch 5, **dadurch gekennzeichnet, dass** die Vorrichtung zum Einstellen der Länge des Abstandshalters eine Spannschlosshülse mit einer oder mehrerer Kontermuttern aufweist.

7. Stromabnehmer nach einem der Ansprüche 5 oder 6, **dadurch gekennzeichnet, dass** der Isolator derart angeordnet ist, um eine elektrische Verbindung von einem Ende zu einem anderen Ende des Abstandshalters zu verhindern.

8. Stromabnehmer nach einem der vorhergehenden Ansprüche, **dadurch gekennzeichnet, dass** jeder Stromabnehmerarm in Form einer Stromabnehmerstange ausgebildet ist und/oder einen Stromabnehmerkopf aufweist.

9. Fahrzeug, insbesondere Baumaschine, insbesondere für den Bergbau- oder Minenbetrieb, insbesondere Muldenkipper mit einer aufstellbaren Mulde, mit einem Stromabnehmer nach einem der vorhergehenden Ansprüche.

10. Verfahren zur Verhinderung eines mechanischen und/oder elektrischen Kontakts zwischen zwei Stromabnehmerarmen eines Stromabnehmers, vorzugsweise nach einem der Ansprüche 1 bis 8, **dadurch gekennzeichnet, dass** ein mechanischer und/oder elektrischer Kontakt zwischen den Stromabnehmerarmen mittels eines Abstandshalters verhindert wird.

11. Verfahren nach Anspruch 10, **dadurch gekennzeichnet, dass** einer der zwei Stromabnehmerarme in einem bestimmten Drehwinkelbereich in eine Drehrichtung um eine Drehachse gedreht wird, wobei der andere Stromabnehmerarm mittels des Abstandshalters in die gleiche Drehrichtung gedreht wird, und/oder wobei die Stromabnehmerarme jeweils beim Drehen eines der zwei Stromabnehmerarme jeweils in einem anderen als dem bestimmten Drehwinkelbereich unabhängig voneinander gedreht werden.
